**Europäisches Patentamt**

**European Patent Office**

**Office européen des brevets**

(19)

(11) Veröffentlichungsnummer: **0 050 764**
**B1**

(12) # EUROPÄISCHE PATENTSCHRIFT

(45) Veröffentlichungstag der Patentschrift:
**22.02.84**

(51) Int. Cl.³: **C 03 B 9/38**

(21) Anmeldenummer: **81108060.5**

(22) Anmeldetag: **08.10.81**

(54) Druckfluidverteilvorrichtung zur Kühlung eines Formwerkzeugs zur Verarbeitung thermoplastischer Stoffe.

(30) Priorität: **25.10.80 DE 3040310**

(43) Veröffentlichungstag der Anmeldung:
**05.05.82 Patentblatt 82/18**

(45) Bekanntmachung des Hinweises auf die Patenterteilung:
**22.02.84 Patentblatt 84/8**

(84) Benannte Vertragsstaaten:
**AT BE CH FR GB IT LI LU NL SE**

(56) Entgegenhaltungen:
**DE - A - 2 134 596**
**FR - A - 2 317 237**
**US - A - 2 485 836**
**US - A - 3 586 491**

(73) Patentinhaber: **HERMANN HEYE, Allee,
D-3063 Obernkirchen (DE)**

(72) Erfinder: **Hermening, Helmut, Döhren 37,
D-4953 Petershagen 8 (DE)**
Erfinder: **Monden, Norbert, Nelkenweg 6,
D-3262 Auetal 2 (DE)**
Erfinder: **Schaar, Lothar, Am Südbach 34,
D-3061 Heuerssen (DE)**
Erfinder: **Schneider, Wilhelm, Feldstrasse 22,
D-3262 Auetal 2 (DE)**
Erfinder: **Seidel, Hans-Georg,
Gerhart-Hauptmann-Weg 7, D-3260 Rinteln (DE)**

(74) Vertreter: **Kosel, Peter, Dipl.-Ing. et al, Patentanwälte
Dipl.-Ing. Horst Röse Dipl.-Ing. Peter Kosel
Postfach 129 Odastrasse 4a, D-3353 Bad Gandersheim
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Druckfluidverteilvorrichtung zur Kühlung eines Formwerkzeugs zur Verarbeitung thermoplastischer Stoffe

Die Erfindung betrifft eine Verteilvorrichtung für ein Druckfluid, insbesondere Luft, zur Kühlung eines Formwerkzeugs einer Maschine zur Verarbeitung thermoplastischer Stoffe, insbesondere schmelzflüssigen Glases, wobei das Formwerkzeug wenigstens eine geteilte Form aufweist, deren Formsegmente jeweils durch einen Formsegmenthalter getragen und relativ zueinander bewegbar sind, wobei ferner mit jedem Formsegmenthalter mitbewegbare, an eine Fluidquelle angeschlossene Fluidverteilmittel vorgesehen sind, und wobei Auslaßöffnungen der Fluidverteilmittel durch eine Schnittstelle für eine lösbare, schraubfreie Verbindung definierende Verbindungsmittel mit Einlaßöffnungen von in einer Wand des Formwerkzeugs vorgesehenen Fluidkanälen schraubfrei verbindbar sind.

Bei einer bekannten Verteilvorrichtung dieser Art (GB-PS 1 337 292) sind bei einer Dreifachform die als Verteilerrohr ausgebildeten Fluidverteilmittel jeweils an dem als schwenkbare Zangenhälfte ausgebildeten Formsegmenthalter befestigt. Jedes Verteilerrohr besitzt für jedes Formsegment nur eine Auslaßöffnung, in der die als ein Stutzen ausgebildeten Verbindungsmittel durch eine Druckfeder vorgespannt und durch das zugehörige Formsegment axial verschiebbar sind. Der Stutzen liegt im Betrieb in einer allen Fluidkanälen des Formsegments gemeinsamen Einlaßöffnung etwa in der Längsmitte des Formsegments. Dem Verteilerrohr wird Kühlluft durch eine an der Zangenhälfte befestigte Versorgungsleitung zugeführt. Diese bekannte Anordnung benötigt viel seitlichen Raum und ist auf die Einspeisung der Kühlluft an nur einer Einlaßöffnung in der Längsmitte des Formsegments eingeschränkt. Dadurch ist eine differenzierte Beaufschlagung der Fluidkanäle eines Formsegments mit Druckfluid ausgeschlossen.

Aus der DE-PS 2 537 037 der Anmelderin ist es an sich bekannt, die Fluidkanäle jedes Formsegments jeweils in einer durch eine Längsachse der zugehörigen Formausnehmung verlaufenden Ebene anzuordnen und die Fluidbeaufschlagung des Fluidkanals und/oder einer oder mehrerer Gruppen der Fluidkanäle unabhängig voneinander gesteuert und/oder geregelt einzustellen. Dazu werden unterschiedliche Fluidzuleitungselemente in Verbindung mit Einlaßöffnungen der Fluidkanäle mit dem Formsegment verschraubt. Obgleich damit eine differenzierte Beaufschlagung der Fluidkanäle jedes Formsegments mit Kühlfluid möglich ist, sind Montage und Demontage der Zuleitungselemente beim Einbau und Wechsel der Formen umständlich und zeitraubend. Auch steht in manchen Maschinen nur sehr begrenzter Raum im Bereich der Formen zur Verfügung, so daß eine Anbringung der bekannten Zuleitungselemente an den Formsegmenten sehr erschwert, wenn nicht ausgeschlossen ist.

Aus der US-PS 4 142 884 ist es an sich bekannt, jeden Fluidkanal 14 über einen zugehörigen Zweigkanal 14 aus einem jedem Formsegment jeder Hälfte des Formwerkzeugs 12 zugeordneten Verteilerkanal 17 zu speisen. Die Verteilerkanäle 17 sind jeweils über einen Teilkanal mit einem gemeinsamen, an eine Fluidquelle 28 angeschlossenen Versorgungsstutzen 21 verbunden. Nachteilig ist dabei, daß für beide Formsegmente jeder Hälfte des Formwerkzeugs 12 alle Fluidkanäle 14, alle Zweigkanäle 14, die beiden Verteilerkanäle 17, die beiden Teilkanäle und der Versorgungsstutzen 21 fest miteinander und mit den Formsegmenten verbunden sind und oberhalb der Formsegmente viel Raum beanspruchen. Bei dem periodisch aufgrund von Verschleiß und beim Wechsel des herzustellenden Gegenstandes erforderlichen Austausch der Formsegmente müssen sämtliche neuen Formsegmente mit der aufwendigen und sperrigen Druckfluidverteilvorrichtung bis einschließlich des Stutzens 21 ausgerüstet sein. Dadurch sind Montage und Lagerhaltung der Formsegmente erschwert.

Der Erfindung liegt die Aufgabe zugrunde, eine differenzierte Beaufschlagung der Fluidkanäle jedes Formsegments mit Kühlfluid mit einfachen, nur wenig Raum beanspruchenden sowie leicht und schnell zu handhabenden Mitteln zu gewährleisten.

Diese Aufgabe ist nach der Erfindung durch die im Kennzeichnungsteil des Anspruchs 1 angegebenen Mittel gelöst. Da jeder Zweigkanal nur einen Teil der Fluidkanäle des zugehörigen Formsegments mit Druckfluid versorgt, kann er unter bestmöglicher Ausnutzung des Raumangebots der Maschine günstig verlegt werden. Die Querschnittsgestaltung der Zweigkanäle kann optimiert werden, um in den Fluidkanälen gewünschte Strömungsverhältnisse des Druckfluids zu erreichen. Die Masse der Formsegmente kann minimal gehalten werden. Man erreicht sehr kurze Formwechselzeiten. Bei einem Wechsel der Formsegmente verbleibt der Fluidverteilerkasten an dem Formsegmenthalter und kann die Einstellung von gegebenenfalls stromaufwärts von der Schnittstelle vorgesehenen Drosselventilen beibehalten werden, wenn das bisherige Formsegment gegen ein gleichartiges neues ausgetauscht wird.

Die Teilkanäle gemäß Anspruch 2 sind bei besonderen räumlichen Verhältnissen innerhalb der Maschine vorteilhaft und können auch zur Erzielung besonderer Strömungsverhältnisse in den Fluidkanälen und zur Vereinfachung der differenzierten Beaufschlagung der Fluidkanäle einen Beitrag leisten.

Mit den Drosselventilen gemäß Anspruch 3 läßt sich in jedem Fall der Druck des Druckfluids zwischen 0 und 100% verändern. Die Drosselventile können von Hand oder motorisch und im letzteren Fall gesteuert oder geregelt verstellbar sein.

Die besondere Ausbildung gemäß Anspruch 4 hat den Vorteil, daß die Wippe bzw. ein das Schwenklager der Wippe bildender Wippenbolzen von zusätzlichen Konstruktionselementen entlastet ist.

Die Merkmale des Anspruchs 5 bieten eine besonders einfache und unmittelbare Verbindung des Fluidverteilerkastens mit den Einlaßöffnungen der Fluidkanäle. Eine besondere Dichtanpressung in der Schnittstelle erübrigt sich, da einerseits üblicherweise ein Druckfluid, z. B. Kühlluft, von nur geringem Gebläsedruck in der Größenordnung von $50 \times 10^2$ Pascal in der Hohlglasherstellung verwendet wird, und da andererseits das Formsegment aufgrund seines Eigengewichtes eine ausreichende Dichtverbindung an der Schnittstelle herstellt. Auch ist der Wechsel der Formsegmente bei dieser Konstruktion besonders einfach. Ferner lassen sich an der Schnittstelle ohne weiteres Relativbewegungen in Querrichtung zwischen dem Formsegment und dem Formsegmenthalter kompensieren. Solche Querbewegungen kommen im Betrieb aufgrund der meist mit Spiel in Querrichtung versehenen Aufhängung der Formsegmente an den Formsegmenthaltern vor.

Die Maßnahmen des Anspruchs 6 dienen einer raumsparenden Gesamtanordnung und der kontrollierten Beaufschlagung der Fluidkanäle mit Druckfluid. Die als Kammern ausgebildeten Teilkanäle haben eine Strömungsberuhigung zur Folge, so daß der einer gleichmäßigen Beaufschlagung der Fluidkanäle abträgliche dynamische Anteil des Druckfluids unwirksam gemacht wird.

Die Ausbildung gemäß Anspruch 7 hat sich insbesondere bei Fluidkanälen gemäß der vorerwähnten DE-PS 2 537 037 als sehr vorteilhaft erwiesen. Das Temperaturprofil an der mit dem thermoplastischen Stoff in Verbindung tretenden Fläche des Formsegments läßt sich auf diese Weise mit der gewünschten Genauigkeit einstellen und halten.

Die Merkmale des Anspruchs 8 gestatten eine einfache Versorgung der Fluidkanäle auch dann, wenn ein unmittelbarer Anschluß der Fluidkanäle an die Auslaßöffnungen der Zweigkanäle aus konstruktiven Gründen nicht möglich ist. Eventuelle Drosselventile werden zweckmäßigerweise stromaufwärts von der Schnittstelle vorgesehen, damit beim Formenwechsel die einmal gefundene optimale Einstellung der Drosselventile beibehalten werden kann.

Die Verbindungskörper gemäß Anspruch 9 stellen ein funktionssicheres und wartungsfreies Verbindungselement dar. Alternativ können diese Verbindungskörper auch an dem Fluidverteilerkasten vorgesehen und mit ihrem freien Rand jeweils auf einer die Einlaßöffnung des zugehörigen Verbindungskanals umgebenden komplementären Gegenfläche des Verbindungskastens aufliegen.

Durch die Maßnahmen des Anspruchs 10 kann in jedem Fall eine ausreichende Dichtanpressung gewährleistet werden. Statt des Gewichtsstückes kann auch eine Druckfeder zwischen dem Verbindungskörper und dem ihn tragenden Verbindungskasten oder Fluidverteilerkasten vorgesehen sein.

Die Erfindung wird nachfolgend anhand der in den Zeichnungen dargestellten Ausführungsbeispiele näher erläutert. Es zeigt

Fig. 1 die Draufsicht auf einen Teil einer Glasformmaschine mit an einem Halterarm befestigtem Fluidverteilerkasten,

Fig. 2 die Schnittansicht gemäß Linie 2-2 in Fig. 1,

Fig. 2A die Draufsicht gemäß Linie 2A-2A in Fig. 2 in verkleinerter Darstellung,

Fig. 3 die Schnittansicht nach Linie 3-3 in Fig. 2,

Fig. 4 einen Längsschnitt durch einen Teil einer anderen Ausführungsform mit an einem Wippenbolzen befestigtem Fluidverteilerkasten,

Fig. 5 einen anderen Längsschnitt durch den Fluidverteilerkasten gemäß Fig. 4, und zwar gemäß Linie 5-5 in Fig. 6,

Fig. 6 die Draufsicht gemäß Linie 6-6 in Fig. 5,

Fig. 7 die Schnittansicht nach Linie 7-7 in Fig. 5,

Fig. 8 die Schnittansicht nach Linie 8-8 in Fig. 5,

Fig. 9 die Schnittansicht nach Linie 9-9 in Fig. 5,

Fig. 10 einen Längsschnitt durch eine andere Ausführungsform mit einem Verbindungskasten an dem Formsegment und

Fig. 11 ein Ersatzschaltbild für eine weitere Ausführungsform.

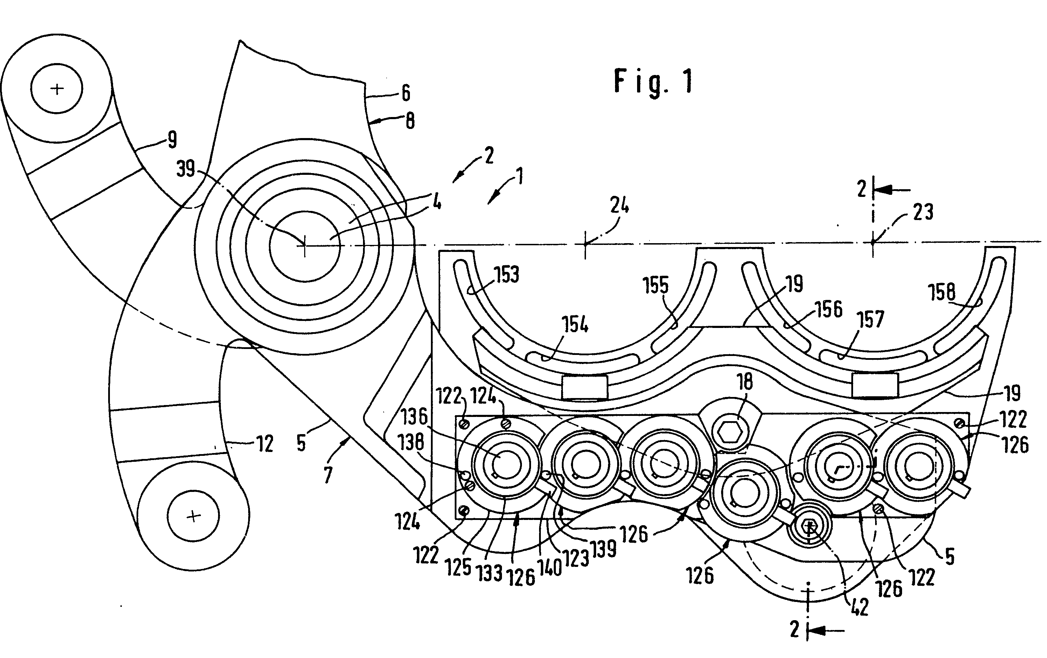

Fig. 1 zeigt eine Vorformseite 1 einer Station 2 einer sogenannten I.S.-Glasformmaschine. Mit der Station 2 werden aus einem nicht gezeichneten Tropfenspeiser kommende Tropfen schmelz- bzw. zähflüssigen Glases im Preß-Blas-Verfahren zu Hohlglasgegenständen geformt.

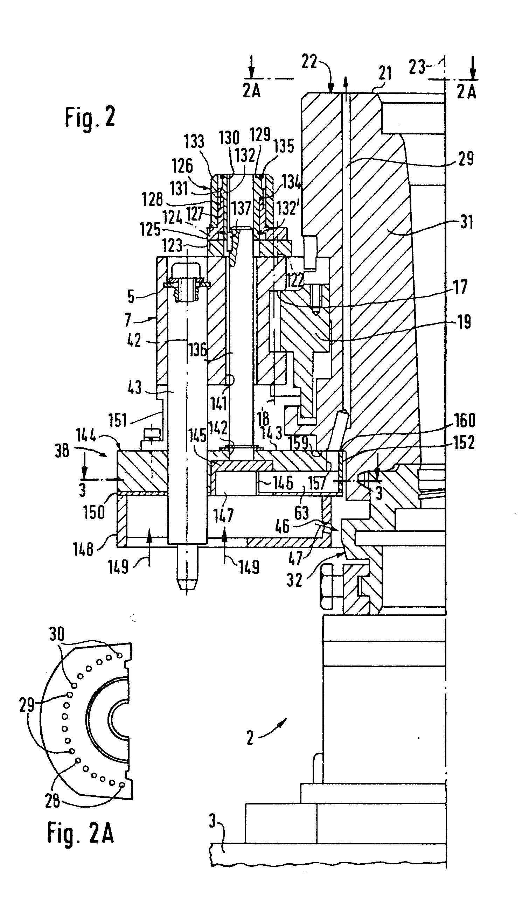

Mit einem Maschinengestell 3 (Fig. 2) der Station 2 ist eine senkrecht stehende Scharniersäule 4 fest verbunden, an der zangenartige Halterarme 5 und 6 von Formsegmenthaltern 7 und 8 schwenkbar gelagert sind. In Fig. 1 ist der Formsegmenthalter 7 in seiner geschlossenen und ein Teil des Formsegmenthalters 8 in seiner am weitesten geöffneten Stellung gezeichnet. An dem Halterarm 5 ist ein rückwärtiger Arm 9 befestigt, der in an sich bekannter, nicht gezeichneter Weise über einen Bolzen an einer Lasche angelenkt ist. In ähnlicher Weise erstreckt sich von dem Halterarm 6 ein rückwärtiger Arm 12, der über einen Bolzen mit einer Lasche gekuppelt ist. Die Laschen sind jeweils an einem Kurbelzapfen einer an einer Antriebswelle befestigten Kurbel angelenkt und dadurch antreibbar.

In einer seitlichen Ausnehmung 17 (Fig. 2) des Halterarms 5 ist an einem Wippenbolzen 18 eine Wippe 19 schwenkbar gelagert. Gleiches gilt für den Halterarm 6, so daß die weitere Beschreibung gleichzeitig auf die Halterarme 5, 6 zutrifft, lediglich mit spiegelbildlicher Ausbildung und Anordnung der entsprechenden Teile.

In die Wippe 19 sind jeweils in an sich bekannter Weise zwei gleiche, als Vorformhälften ausgebildete Formsegmente 21 (Fig. 2) einhängbar. Die Formsegmente 21 sind Bestandteile eines in diesem Fall als Doppelform ausgebildeten Formwerkzeugs 22. Jedes Formsegment 21 ist mit drei aufeinanderfolgend auf einem Kreisbogen um eine Längsachse 23 und 24 der Formsegmente 21 angeordneten Gruppen von Fluidkanälen 28 bis 30 (Fig. 2A) versehen, die in einer Wand 31 (Fig. 2) der Formsegmente 21 jeweils vollständig in einer durch die Längsachse 23, 24 verlaufenden Ebene liegen.

Jedem Formsegment 21 ist gemäß Fig. 2 ein geteiltes Mündungswerkzeug 32 zugeordnet, dessen Segmente in an sich bekannter Weise unabhängig von den Formsegmenthaltern 7, 8 bewegbar an der Station 2 gelagert sind. In der geschlossenen Stellung gemäß Fig. 2 übergreifen untere Bereiche der Formsegmente 21 obere Bereiche der geschlossenen Mündungswerkzeuge 32. Nicht gezeichnete Preßstempel dringen in an sich bekannter Weise von unten zentral durch die Mündungswerkzeuge 32 hindurch in das Innere der geschlossenen Formsegmente 21 und formen aus dem zuvor in das Formwerkzeug 22 eingebrachten Glasposten jeweils ein Külbel.

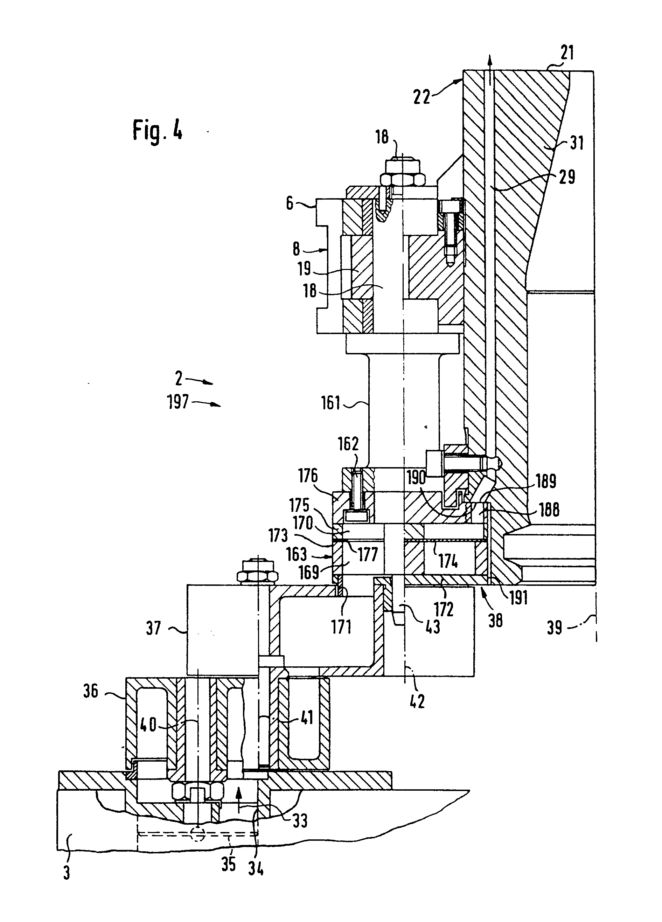

In einem nicht gezeichneten Hohlraum des Maschinengestells 3 ist in an sich bekannter Weise Gebläseluft als Kühlfluid bereitgestellt. Dieses Druckfluid strömt in Richtung eines Pfeils 33 (Fig. 4) durch einen Zuführkanal 34 des Maschinengestells 3. In dem Zuführkanal 34 kann in an sich bekannter Weise ein Drosselventil 35 angeordnet sein, das zwischen einer den Zuführkanal 34 voll öffnenden und voll schließenden Endstellung steuerbar oder regelbar eingestellt werden kann. Das Druckfluid tritt aus dem Zuführkanal 34 in ein erstes Gelenkkanalteil 36 ein, durchströmt ein zweites Gelenkkanalteil 37 und gelangt von dort in Fluidverteilmittel 38, die im einzelnen später beschrieben werden.

Die Scharniersäule 4 bildet eine erste Schwenkachse 39, zu der eine zweite Schwenkachse 40 parallel verläuft, um die das erste Gelenkkanalteil 36 relativ zu dem Maschinengestell 3 bei stets ununterbrochener Druckfluidübernahme aus dem Zuführkanal 34 schwenkbar ist. Das zweite Gelenkkanalteil 37 ist relativ zu dem ersten Gelenkkanalteil 36 um eine dritte Schwenkachse 41 und relativ zu den Fluidverteilmitteln 38 um eine auch in Fig. 2 gezeichnete vierte Schwenkachse 42 schwenkbar. Alle vier Schwenkachsen 39 bis 42 verlaufen parallel zueinander und im Abstand voneinander.

Die Gelenkkanalteile 36, 37 werden durch einen Antriebsbolzen 43 (Fig. 2) schwenkend mitgenommen, der in dem Halterarm 5 befestigt ist. Der Formsegmenthalter 8 ist mit den Fluidverteilmitteln 38 entsprechenden Fluidverteilmitteln und mit den Gelenkkanalteilen 36, 37 entsprechenden Gelenkkanalteilen spiegelbildlich ausgestattet, so daß jeweils die Beschreibung einer Ausstattung genügt.

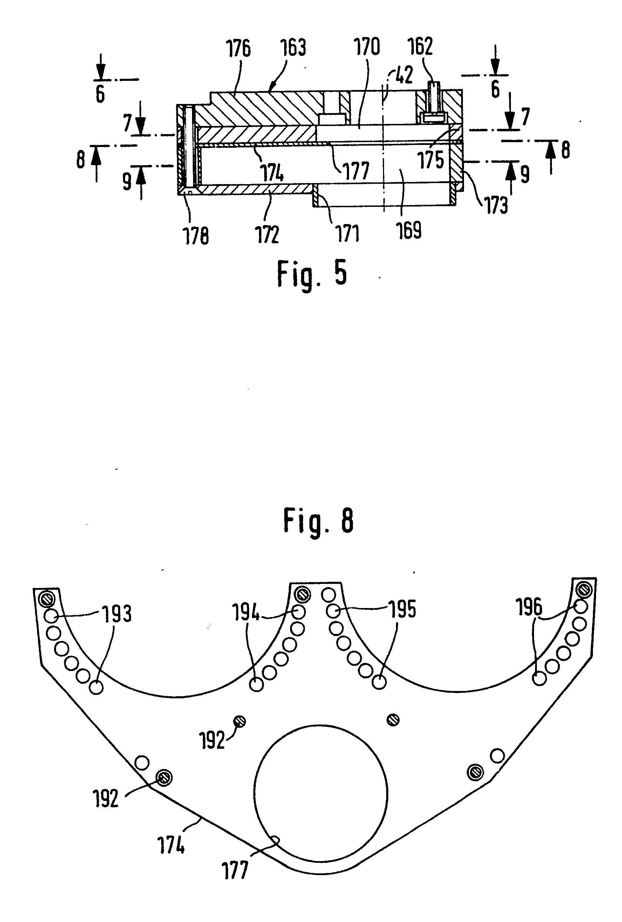

Bei den in den Fig. 1 bis 9 dargestellten Ausführungsbeispielen wird das Druckfluid am unteren Ende jedes Formsegments 21 eingespeist. Der Ort der Einspeisung in das Formsegment richtet sich nach dem Bereich des größten Wärmeanfalls in der Wand 31 des Formsegments. Man wird das Kühlfluid stets dort einzuleiten versuchen, wo der größte Wärmeanfall in der Wand 31 besteht.

Gemäß Fig. 1 ist mit einer Oberseite des Halterarms 5 mittels Schrauben 122 eine langgestreckte Montageplatte 123 verschraubt, mit deren Oberseite mittels Schrauben 124 Arretierteile 125 von sechs Arretierelementen 126 verschraubt sind.

Derartige Arretierelemente 126 liefert z. B. die Firma Otto Ganter Normteile Fabrik, D-7743 Furtwangen/Schwarzwald.

Gemäß Fig. 2 trägt jedes Arretierteil 125 an einer sich nach oben erstreckenden Buchse 127 oben eine Außenverzahnung 128. In der Buchse 127 ist eine Verstellbuchse 129 drehbar gelagert, die innen mit einer durchgehenden Nabennut 130 und oben mit einem eine Außenverzahnung 131 tragenden Bund 132 versehen ist. Die Außenverzahnungen 128, 131 besitzen die gleiche Teilung und miteinander fluchtende Teilkreise. Der Bund 132 liegt oben auf der Buchse 127 auf. Die Verstellbuchse 129 ist in axialer Richtung durch einen sich an einer Schulter des Arretierteils 125 abstützenden Sicherungsring 132' festgelegt. Außen auf der Buchse 127 ist eine Verstellhülse 133 drehbar gelagert, die mit einer Innenverzahnung 134 gleicher Teilung wie die Außenverzahnungen 128, 131 ständig im Eingriff mit der Außenverzahnung 131 steht und wahlweise in Eingriff mit der Außenverzahnung 128 bringbar ist. Dazu kann die Verstellhülse 133 relativ zu der Verstellbuchse nach oben gezogen werden, wo ein Sicherungsring 135 als Anschlag für die Innenverzahnung 134 den Weg begrenzt. In dieser angehobenen Stellung der Verstellhülse 133 kann diese wegen des fortbestehenden Eingriffs der Verzahnungen 134, 131 zusammen mit der Verstellbuchse 129 gedreht werden. Bei dieser Drehung wird eine Welle 136 über eine Feder 137 drehend mitgenommen. Ist die gewünschte neue Drehstellung der Welle 136 erreicht, wird die Verstellhülse 133 mit ihrer Innenverzahnung 134 nach unten in erneuten Eingriff mit der Außenverzahnung 128 geschoben, wie dies im einzelnen Fig. 2 zu entnehmen ist. Die Drehbewegung der Welle 136 wird in jedem Fall durch zwei sich von dem Arretierteil 125 nach oben erstreckende Anschlagstifte 138 und 139 und einen damit zusammenwirkenden Begrenzungsstift 140 der Verstellhülse 133 begrenzt.

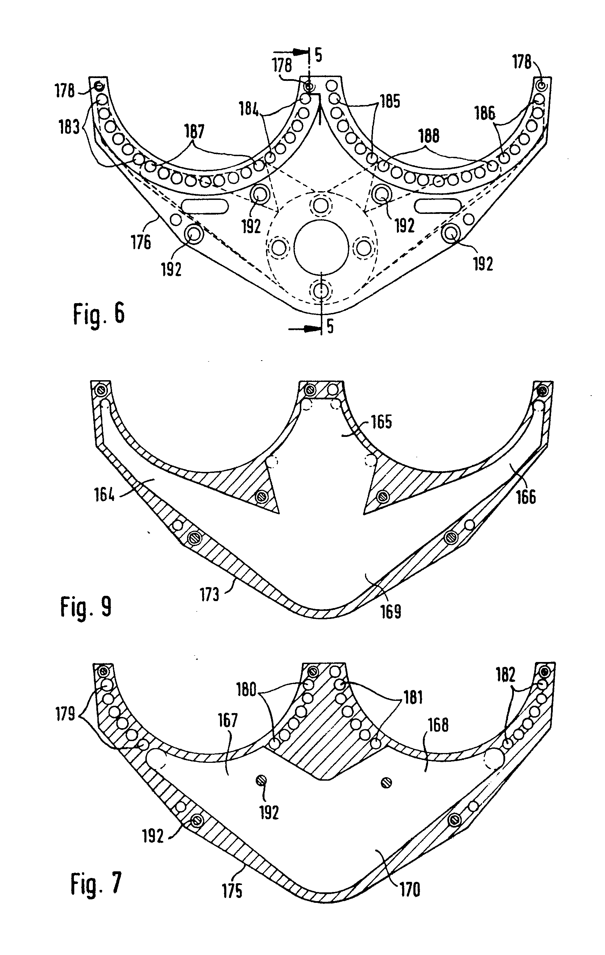

Jede Welle 136 ist durch eine Bohrung 141 des Halterarmes 5 und eine damit koaxiale Bohrung 142 in einer Deckenwand 143 eines Fluidverteilerkastens 144 der Fluidverteilmittel 38 hindurchgeführt und trägt an ihrem unteren Ende ein topfförmiges Drosselventil 145 mit einer seitlichen Auslaßöffnung 146. Das Drosselventil 145 ist in eine Aufnahmeöffnung des Fluidverteilerkastens 144 eingepaßt und steht mit einer Einlaßöffnung 147 in ständiger Verbindung mit dem Innenraum eines Sammelkastens 148, dem Druckfluid in Richtung von Pfeilen 149 durch das nur in Fig. 4 gezeigte zweite Gelenkkanalteil 37 zugeführt wird. Aus dem Sammelkasten 148 werden mittels einer Düsenvorrichtung 46 die Mündungswerkzeuge 32 in Richtung eines Pfeils 47 mit dem Druckfluid frei angeblasen. Zwischen dem Sammelkasten 148 und dem Fluidverteilerkasten 144 ist eine metallische Dichtungsplatte 150 angeordnet. Der Sammelkasten 148, die Dichtungsplatte 150 und der Fluidverteilerkasten 144 sind durch nicht dargestellte Schrauben miteinander zu einer die Fluidverteilmittel 38 bildenden Einheit verbunden, die ihrerseits über Zwischenstücke 151 (Fig. 7) mit einer Unterseite des Halterarmes 5 verschraubt ist. Normalerweise besteht zwischen dieser Einheit und dem Formsegment 21 ein radialer Spalt 152, der begrenzte Relativbewegungen in radialer Richtung zuläßt.

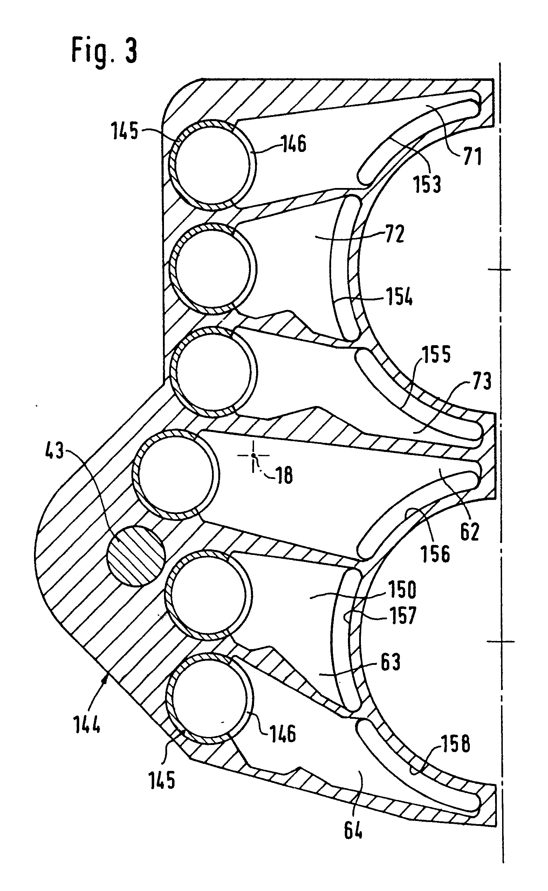

Der Fluidverteilerkasten 144 weist Zweigkanäle 62 bis 64 und 71 bis 73 (Fig. 3) auf. Jeder Zweigkanal, z. B. 63, kann gemäß Fig. 2 durch entsprechende Drehung des Drosselventils 145 geschlossen werden. Jeder Zweigkanal, z. B. 63, weist in der Deckenwand 143 des Fluidverteilerkastens 144 eine bogenschlitzförmige Auslaßöffnung 153 bis 158 auf, die in einer zu einer Verbindungsfläche 159 des Formsegments 21 komplementären Gegenfläche 160 des Fluidverteilerkastens 144 münden. Die Verbindungsfläche 159 enthält mit den Auslaßöffnungen 153 bis 158 fluchtende Einlaßöffnungen der Fluidkanäle 28 bis 30 (Fig. 2A) und ist einfach auf die Gegenfläche 160 aufgesetzt. Zwischen der Gegenfläche 160 und der Verbindungsfläche 159 besteht also eine Schnittstelle für eine lösbare, schraubfreie Verbindung der Formsegmente 21 mit der Druckfluidverteilvorrichtung. Ein Austausch der Formsegmente 21 gegen andere Formsegmente ist besonders einfach und schnell durchzuführen. Dabei kann, solange kein neuer Formsegmenttyp eingewechselt wird, die Trimmung der Drosselventile 145 in vorteilhafter Weise unverändert beibehalten werden. Zusätzliche Dichtelemente zur Vermeidung von Druckfluidleckagen sind an der Schnittstelle nicht erforderlich.

Fig. 3 zeigt weitere Einzelheiten des Fluidverteilerkastens 144 und insbesondere einen Querschnitt durch die Zweigkanäle 62 bis 64 und 71 bis 73.

Fig. 4 zeigt eine andere Ausführungsform der Verteilvorrichtung für eine Fertigformseite 197 der Station 2, bei der die Formsegmente 21 durch Fertigformhälften gebildet sind. Gleiche Teile wie in den Fig. 1 bis 3 sind nachfolgend mit gleichen Bezugszeichen versehen. Der Wippenbolzen 18 ist nach unten durch ein Verlängerungsstück 161 verlängert, an das sich unten koaxial der Antriebsbolzen 43 für die Schwenkbewegung der Gelenkkanalteile 36, 37 anschließt. Der Wippenbolzen 18 und der Antriebsbolzen 43 sind hier also einstückig ausgebildet.

Unterhalb des Verlängerungsstückes 161 ist mit Schrauben 162 ein Fluidverteilerkasten 163 befestigt, in dem Zweigkanäle 164 bis 168 speisende Teilkanäle 169 und 170 (Fig. 7 und 9) durch gesonderte, in zueinander parallelen Ebenen angeordnete Kammern gebildet sind. Dazu ist der Fluidverteilerkasten 163 in dieser Reihenfolge mit einer eine Einlaßöffnung 171 für das Kühlfluid aufweisenden Bodenwand 172, einem den Teilkanal 169 umschließenden ersten Gehäuse 173, einer metallischen Dichtungsscheibe 174, einem den Teilkanal 170 umschließenden zweiten Gehäuse 175 und einer Deckenwand 176 versehen. In der Dichtungsscheibe 174 befindet sich eine Durchbrechung 177, die dem Druckfluid ein Überströmen von dem Teilkanal 169 in den Teilkanal 170 in einem durch die freie Querschnittsfläche der Durchbrechung 177 bestimmten Ausmaß ermöglicht. Die Einzelteile des Fluidverteilerkastens 163 werden durch Schrauben 178 zusammengehalten.

Unter gleichzeitiger Bezugnahme auf die Fig. 4 bis 9 ist zu sehen, daß das Druckfluid durch die Einlaßöffnung 171 in den Teilkanal 169 einströmt. Ein Teil dieses Fluidstroms gelangt durch die Durchbrechung 177 in den Teilkanal 170, während der Rest des Fluidstroms sich in dem Teilkanal 169 gemäß Fig. 9 in die Zweigkanäle 164, 165, 166 verzweigt und von dort über Bohrungsgruppen 179 bis 182 in dem zweiten Gehäuse 175 und damit fluchtende Bohrungsgruppen 183 bis 186 in der Deckenwand 176 gelangt.

Der durch die Durchbrechung 177 hindurchgetretene Teilstrom des Druckfluids verzweigt sich in dem Teilkanal 170 in die Zweigkanäle 167, 168 und gelangt von dort in Bohrungsgruppen 187 und 188 in der Deckenwand 176. Fig. 4 zeigt als Beispiel eine Bohrung der Bohrungsgruppe 188 im Längsschnitt. Sämtliche Bohrungsgruppen 183 bis 186, 187, 188 münden in einer Gegenfläche 189 der Deckenwand 176. Die Gegenfläche 189 ist komplementär zu einer unteren Verbindungsfläche 190 der Formsegmente 21 ausgebildet, in der sämtliche Einlaßöffnungen der Fluidkanäle 28 bis 30 (vgl. Fig. 2A) liegen. Eine ausreichende Druckfluidabdichtung zwischen der Verbindungsfläche 190 und der Gegenfläche 189 wird allein durch das Eigengewicht der auf die Gegenfläche 189 aufgestellten Formsegmente 21 erreicht. Dort ist wiederum eine Schnittstelle für eine lösbare und schraubfreie Verbindung der Formsegmente 21 mit der Druckfluidverteilvorrichtung gebildet.

Ein Spalt 191 gewährleistet radiale Bewegbarkeit zwischen dem Formsegment 21 und dem Fluidverteilerkasten 163 in dem durch die mit Spiel versehene Aufhängung der Formsegmente 21 erforderlichen Umfang.

Die Fig. 6 bis 9 zeigen, daß die Einzelteile des Fluidverteilerkastens 163 zusätzlich durch vier Schrauben 192 zusammengehalten werden.

Gemäß Fig. 8 sind in der Dichtungsscheibe 174 mit den Bohrungsgruppen 179 bis 182 fluchtende Bohrungsgruppen 193 bis 196 vorgesehen.

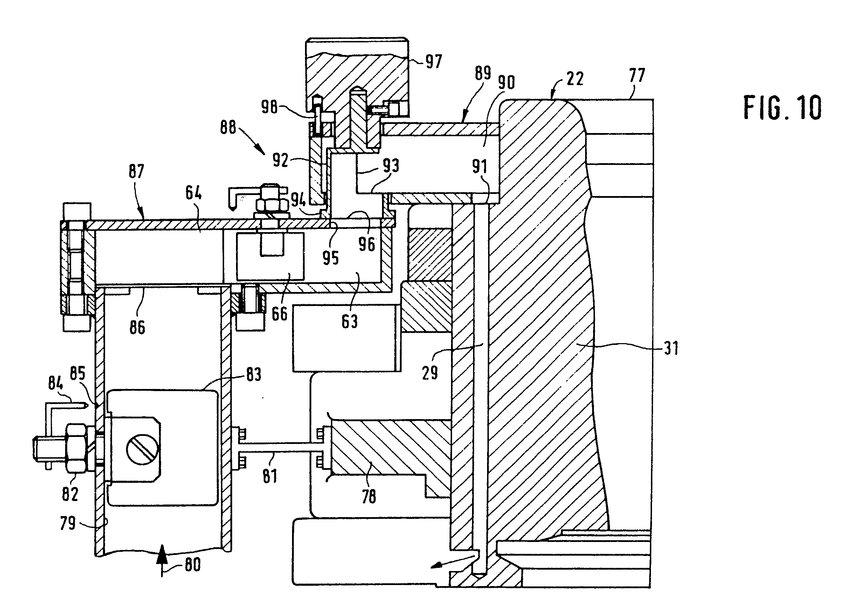

Bei dem weiteren Ausführungsbeispiel gemäß Fig. 10 ist ein Formsegment 77 einer geteilten Einfachvorform in einen Formsegmenthalter 78 eingehängt und zusammen mit diesem entsprechend Fig. 1 um eine nicht gezeichnete Scharniersäule schwenkbar. Das Formsegment 77 ist in ähnlicher Weise wie die Formsegmente 21 mit Gruppen achsparalleler Fluidkanäle, z. B. 29, versehen.

Ein Zuführkanal 79 von rechteckiger Querschnittsfläche erhält Druckfluid in Richtung eines Pfeils 80, z. B. durch einen mit einer Kühlluftbox des Maschinengestells verbundenen Schlauch. Der Zuführkanal 79 ist mittels einer Halterung 81 an dem Formsegmenthalter 78 befestigt und gemeinsam mit diesem bewegbar. In dem Zuführkanal 79 ist ein nach Lösen einer Mutter 82 verstellbares Drosselventil 83 vorgesehen, dessen jeweilige Drosselstellung mittels eines Zeigers 84 an Marken 85 in einer Außenwand des Zuführkanals 79 ablesbar ist.

Der Zuführkanal 79 mündet in eine Einlaßöffnung 86 eines Fluidverteilerkastens 87 von Fluidverteilmitteln 88.

Der Fluidverteilerkasten 87 weist drei Zweigkanäle auf, von denen in Fig. 10 nur die Zweigkanäle 63, 64 zu erkennen sind. An dem Formsegment 77 ist ein Verbindungskasten 89 befestigt, der für jeden der Zweigkanäle, z. B. 63, des Fluidverteilerkastens 87 einen Verbindungskanal 90 zu Einlaßöffnungen 91 der Fluidkanäle, z. B. 29, aufweist. Die Fluidkanäle, z. B. 29, werden hier also von oben nach unten von dem Druckfluid durchströmt. In jeden Verbindungskanal 90 ist ein topfförmiger Verbindungskörper 92 in senkrechter Richtung bewegbar eingesetzt, der eine seitliche Auslaßöffnung 93 in den Verbindungskanal 90 aufweist. Der Verbindungskörper 92 liegt mit einem freien Rand 94 auf einer eine Auslaßöffnung 95 des zugehörigen Zweigkanals 63 umgebenden komplementären Gegenfläche 96 des Fluidverteilerkastens 87 auf.

Jeder Verbindungskörper 92 ist ferner mit einem die Dichtanpressung zwischen seinem freien Rand 94 und der Gegenfläche 96 erhöhenden Gewichtstück 97 versehen, das vor Relativdrehung gegenüber dem Verbindungskasten 89 durch einen Stift 98 gesichert ist. Zwischen dem freien Rand 94 und der Gegenfläche 96 ist auch in diesem Fall eine Schnittstelle für die lösbare, schraubfreie Verbindung des Verbindungskastens 89 mit den Fluidverteilmitteln 88 geschaffen.

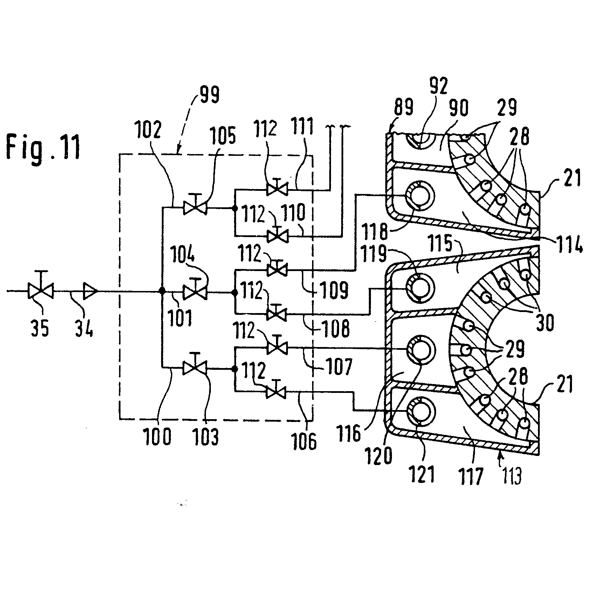

In dem durch das Schaltungsdiagramm gemäß Fig. 11 gekennzeichneten Ausführungsbeispiel werden Fluidverteilmittel 99 durch den Zuführkanal 34 mit Druckfluid versorgt, der sich in drei Teilkanäle 100, 101 und 102 aufspaltet, in die jeweils ein Drosselventil 103, 104 und 105 eingesetzt ist. Jeder Teilkanal 100 bis 102 speist zwei Zweigkanäle 106 bis 111, die jeweils ebenfalls mit einem Drosselventil 112 versehen sind. An den beiden Formsegmenten 21 der hier vorgesehenen Doppelform ist jeweils ein Verbindungskasten 89 und 113 befestigt, deren Verbindungskanäle 90, 114 bis 117 jeweils durch einen topfförmigen Verbindungskörper 92, 118 bis 121 an einer schraubfreien Schnittstelle mit den Zweigkanälen 106 bis 111 eines im einzelnen nicht dargestellten Fluidverteilerkastens entsprechend Fig. 10 verbunden sind.

## Patentansprüche

1. Verteilvorrichtung für ein Druckfluid, insbesondere Luft, zur Kühlung eines Formwerkzeugs (22) einer Maschine zur Verarbeitung thermoplastischer Stoffe, insbesondere schmelzflüssigen Glases, wobei das Formwerkzeug (22) wenigstens eine geteilte Form aufweist, deren Formsegmente (21; 77) jeweils durch einen Formsegmenthalter (7; 8; 78) getragen und relativ zueinander bewegbar sind, wobei ferner mit jedem Formsegmenthalter (7, 8; 78) mitbewegbare, an eine Fluidquelle angeschlossene Fluidverteilmittel (38; 88; 99) vorgesehen sind, und wobei Auslaßöffnungen der Fluidverteilmittel durch eine Schnittstelle für eine lösbare, schraubfreie Verbindung definierende Verbindungsmittel mit Einlaßöffnungen von in einer Wand (31) des Formwerkzeugs (22) vorgesehenen Fluidkanälen (28 bis 30) schraubfrei verbindbar sind, dadurch gekennzeichnet, daß die Fluidverteilmittel (38; 88; 99) für jedes Formsegment (21; 77) mit wenigstens zwei, jeweils mit der Einlaßöffnung wenigstens eines der voneinander getrennten Fluidkanäle (28 bis 30) verbindbaren Zweigkanälen (62, 63, 64, 71, 72, 73; 106 bis 111; 164 bis 168) versehen sind, daß die Fluidverteilmittel (38; 88; 99) einen an dem zugehörigen Formsegmenthalter (7, 8; 78) vorzugsweise lösbar befestigten, die Zweigkanäle enthaltenden Fluidverteilerkasten (87; 144; 163) aufweisen, und daß die Schnittstelle für die schraubfreie Verbindung zwischen Auslaßöffnungen (95; 153 bis 158) der Zweigkanäle (62, 63, 64, 71, 72, 73; 106 bis 111; 164 bis 168) und den Einlaßöffnungen der Fluidkanäle (28 bis 30) angeordnet ist.

2. Verteilvorrichtung nach Anspruch 1, dadurch gekennzeichnet, daß wenigstens zwei der Zweigkanäle (62, 63, 64, 71, 72, 73; 106 bis 111; 164 bis 168) stromaufwärts mit einem Teilkanal (100 bis 102; 169, 170) der Fluidverteilmittel (38; 99) verbunden sind.

3. Verteilvorrichtung nach Anspruch 1 oder 2, dadurch gekennzeichnet, daß in einem Zuführkanal (34; 79) und/oder in jedem Teilkanal (100 bis 102) und/oder in jedem Zweigkanal (62, 63, 64, 71, 72, 73; 106 bis 111) der Fluidverteilmittel (38; 88; 99) ein Drosselventil (35; 103 bis 105; 112; 145) vorgesehen ist.

4. Verteilvorrichtung nach einem der Ansprüche 1 bis 3, dadurch gekennzeichnet, daß bei einem als Mehrfachform ausgebildeten Formwerkzeug (22) und bei einem Formsegment (7; 8), der einen zum Öffnen und Schließen des Formwerkzeugs (22) bewegbaren Haltearm (5;

6) und eine ein Formsegment (21) jeder Form des Formwerkzeugs (22) quer zu seiner Längsachse führende, an dem Halterarm (5; 6) schwenkbar angelenkte Wippe (19) aufweist, der Fluidverteilerkasten (144; 163) an dem Halterarm (5; 6) befestigt ist.

5. Verteilvorrichtung nach einem der Ansprüche 1 bis 4, dadurch gekennzeichnet, daß das Formsegment (21) mit einer die Einlaßöffnungen der Fluidkanäle (28 bis 30) enthaltenden Verbindungsfläche (159; 190) unmittelbar auf eine die mit den Einlaßöffnungen fluchtenden Auslaßöffnungen (153 bis 158) der Zweigkanäle (62, 63, 64, 71, 72, 73; 164 bis 168) enthaltende komplementäre Gegenfläche (160; 189) des Fluidverteilerkastens (144; 163) als Schnittstelle für die schraubfreie Verbindung aufgesetzt ist.

6. Verteilvorrichtung nach einem der Ansprüche 2 bis 5, dadurch gekennzeichnet, daß die Teilkanäle (169, 170) durch gesonderte, in zueinander parallelen Ebenen angeordnete Kammern des Fluidverteilerkastens (163) gebildet sind.

7. Verteilvorrichtung nach Anspruch 6, dadurch gekennzeichnet, daß bei einem als Doppelform ausgebildeten Formwerkzeug (22) jeder Formsegmenthalter (7; 8) einen beiden Formsegmenten (21) gemeinsamen Fluidverteilerkasten (163) aufweist, daß zwei Zweigkanäle (167, 168) eines ersten Teilkanals (170) jeweils mit den Fluidkanälen (29) in einem mittleren Umfangsbereich jedes Formsegments (21) verbunden sind, und daß drei weitere Zweigkanäle (164 bis 166) eines zweiten Teilkanals (169) mit den Fluidkanälen (28, 30) in den verbleibenden Umfangsbereichen der Formsegmente (21) verbunden sind.

8. Verteilvorrichtung nach einem der Ansprüche 1 bis 4, dadurch gekennzeichnet, daß an dem Formsegment (21; 77) ein mit Verbindungskanälen (90; 114 bis 117) versehener Verbindungskasten (89, 113) befestigt ist, und daß jeder Verbindungskanal (90; 114 bis 117) einerseits als Schnittstelle für die schraubfreie Verbindung mittels einer Einlaßöffnung mit der Auslaßöffnung (95) eines der Zweigkanäle (62, 63, 64; 106 bis 111) des Fluidverteilerkastens (87; 99) und andererseits mittels einer Auslaßöffnung mit der Einlaßöffnung (91) wenigstens eines der Fluidkanäle (28 bis 30) verbunden ist.

9. Verteilvorrichtung nach Anspruch 8, dadurch gekennzeichnet, daß an jeder Schnittstelle ein an dem Verbindungskasten (89, 113) bewegbar gelagerter, einen den Anfang des zugehörigen Verbindungskanals (90; 114 bis 117) bildenden Hohlraum aufweisender Verbindungskörper (92; 118 bis 121) vorgesehen ist, und daß jeder Verbindungskörper (92; 118 bis 121) mit einem freien Rand (94) auf einer die Auslaßöffnung (95) des zugehörigen Zweigkanals (62, 63, 64; 106 bis 111) umgebenden komplementären Gegenfläche (96) aufliegt.

10. Verteilvorrichtung nach Anspruch 9, dadurch gekennzeichnet, daß jeder Verbindungskörper (92; 118 bis 121) mit einem die Dichtanpressung zwischen seinem freien Rand (94) und der Gegenfläche (96) erhöhenden Gewichtstück (97) wählbaren Gewichtes versehen ist.

**Claims**

1. Distribution device for a fluid under pressure, especially air, for cooling a forming tool (22) of a machine for processing thermoplastic materials, particularly molten glass, wherein the forming tool (22) comprises at least one split mould, the mould segments (21; 77) of which are carried by a respective mould segment holder (7, 8; 78) and are movable relative to one another, fluid distribution means (38; 88; 99) connected to a source of fluid and movable with each mould segment holder (7, 8; 78) also being provided and wherein outlet openings in the fluid distribution means are screwlessly connectible, through connecting means defining an interface for a detachable screwless connection, with inlet openings of fluid channels (28 to 30) provided in a wall (31) of the forming tool (22), characterized in that the fluid distribution means (38; 88; 99) for each mould segment (21; 77) are provided with at least two branch channels (62, 63, 64, 71, 72, 73; 106 to 111; 164 to 168) respectively connectible with the inlet opening of at least one of the mutually separated fluid channels (28 to 30), that the fluid distribution means (38; 88; 99) include a fluid distributer housing (87; 144; 163), preferably detachably secured to the associated mould segment holder (7, 8; 78), containing the branch channels, and that the interface for the screwless connection is arranged between outlet openings (95; 153 to 158) of the branch channels (62, 63, 64, 71, 72, 73; 106 to 111; 164 to 168) and the inlet openings of the fluid channels (28 to 30).

2. Distribution device according to claim 1, characterized in that at least two of the branch channels (62, 63, 64, 71, 72, 73; 106 to 111; 164 to 168) are connected upstream with a sub-channel (100 to 102; 169, 170) of the fluid distribution means (38; 99).

3. Distribution device according to claim 1 or 2, characterized in that a throttle valve (35; 103 to 105; 112; 145) is provided in a supply channel (34; 79) and/or in each sub-channel (100 to 102) and/or in each branch channel (62, 63, 64, 71, 72, 73; 106 to 111) of the fluid distribution means (38; 88; 99).

4. Distribution device according to any of claims 1 to 3, characterized in that, with a forming tool (22) constructed as a multiple mould and with a mould segment holder (7; 8) which comprises a holding arm (5; 6) movable to open and close the forming tool (22) and a rocker member (19) guiding a mould segment (21) of each mould of the forming tool (22) transversely of its longitudinal axis and pivotally mounted on the holding arm (5; 6), the fluid distributer housing (144; 163) is secured to the holding arm (5; 6).

5. Distribution device according to any of claims 1 to 4, characterized in that the mould segment (21), as the interface for the screwless connection, is provided with a connecting surface (159; 190), containing the inlet openings of the fluid channels (28 to 30), directly seated on a complementary counter-surface (160; 189) of the fluid distributer housing (144; 163) containing the outlet openings (153 to 158) of the branch channels (62, 63, 64, 71, 72, 73; 164 to 168) aligning with the inlet openings.

6. Distribution device according to any of claims 2 to 5, characterized in that the sub-channels (169, 170) are formed by separate chambers of the fluid distributer housing (163) arranged in mutually parallel planes.

7. Distribution device according to claim 6, characterized in that, with a forming tool (22) constructed as a double mould, each mould segment holder (7; 8) includes a fluid distributer housing (163) common to both mould segments (21), that two branch channels (167, 168) of a first sub-channel (170) are respectively connected with the fluid channels (29) in a middle peripheral region of each mould segment (21) and that three further branch channels (164 to 166) of a second sub-channel (169) are connected with the fluid channels (28, 30) in the remaining peripheral regions of the mould segment (21).

8. Distribution device according to any of claims 1 to 4, characterized in that a connecting housing (89, 113) provided with connecting channels (90; 114 to 117) is secured to the mould segment (21; 77) and that, as the interface for the screwless connection, each connecting channel (90; 114 to 117) is connected at one end, by means of an inlet opening, with the outlet opening (95) of one of the branch channels (62, 63, 64; 106 to 111) of the fluid distributer housing (87; 99) and at the other end, by means of an outlet opening, with the inlet opening (91) of at least one of the fluid channels (28 to 30).

9. Distribution device according to claim 8, characterized in that, at each interface, a connecting member (92; 118 to 121) is provided, which is movably mounted on the connecting housing (89, 113) and has a hollow space forming the inlet of the associated connecting channel (90; 114 to 117), and that each connecting member (92; 118 to 121) rests with a free rim (94) upon a complementary counter-surface (96) surrounding the outlet opening (95) of the associated branch channel (62, 63, 64; 106 to 111).

10. Distribution device according to claim 9, characterized in that each connecting member (92; 118 to 121) is provided with a loading member (97) of selectable weight for increasing the sealing pressure between its free rim (94) and the counter-surface (96).

**Revendications**

1. Dispositif distributeur pour un fluide sous pression, en particulier l'air, pour le refroidissement d'un moule de formage (22) d'une machine pour la transformation de matières thermoplastiques, en particulier du verre en fusion, le moule de formage (22) présentant au moins un moule en plusieurs parties, dont les segments de moule (21; 77) sont chacun protés par un support de segment de moule (7, 8; 78) et peuvent se déplacer les uns par rapport aux autres, tandis que sont prévus en outre des moyens distributeurs de fluide (38; 88; 99) pouvant se déplacer avec chaque support de segment de moule (7, 8; 78) et raccordés à une source de fluide, des orifices de sortie des moyens distributeurs de fluide pouvant être reliés d'une manière non-vissée, par l'intermédiaire des moyens de liaison définissant un point de jonction pour une liaison amovible non-vissée, avec des orifices d'entrée de conduits de fluide (28 à 30) prévus dans une paroi (31) du moule de formage (22), caractérisé en ce que les moyens distributeurs de fluide (38; 88; 99) pour chaque segment de moule (21; 77) sont pourvus d'au moins deux conduits de ramification (62, 63, 64, 71, 72, 73; 106 à 111; 164 à 168) pouvant être reliés chacun à l'orifice d'entrée d'au moins l'un des conduits de fluide (28 à 30) séparés les uns des autres, que les moyens distributeurs de fluide (38; 88; 99) présentent un coffret distributeur de fluide (87; 144; 163) fixé de préférence d'une manière amovible au support de segment de moule correspondant (7, 8; 78) et contenant les conduits de ramification, et que le point de jonction pour la liaison non-vissée est disposé entre des orifices de sortie (95; 153 à 158) des conduits de ramification (62, 63, 64, 71, 72, 73; 106 à 111; 164 à 168) et les orifices d'entrée des conduits de fluide (28 à 30).

2. Dispositif distributeur selon la revendication 1, caractérisé en ce qu'au moins deux des conduits de ramification (62, 63, 64, 71, 72, 73; 106 à 111; 164 à 168) sont reliés en amont à un conduit partiel (100 à 102; 169, 170) des moyens distributeurs de fluide (38; 99).

3. Dispositif distributeur selon l'une quelconque des revendications 1 ou 2, caractérisé en ce qu'une soupape d'étranglement (35; 103 à 105; 112; 145) est prévue dans un conduit d'amenée (34; 79) et/ou dans chaque conduit partiel (100 à 102) et/ou dans chaque conduit de ramification (62, 63, 64, 71, 72, 73; 106 à 111) des moyens distributeurs de fluide (38; 88; 99).

4. Dispositif distributeur selon l'une quelconque des revendications 1 à 3, caractérisé en ce que, dans le cas d'un moule de formage (22) constitué comme un moule à cavités multiples, et dans le cas d'un support de segment de moule (7; 8), qui présente un bras support (5; 6) mobile pour ouvrir et fermer le moule de formage (22) et une bascule (19), articulée d'une manière pivotante au bras support (5; 6) et guidant un segment de moule (21) de chaque moule du moule de formage (22) transversalement à son axe longitudinal, le coffret distributeur de fluide (144; 163) est fixé au bras support (5; 6).

5. Dispositif distributeur selon l'une quelconque des revendications 1 à 4, caractérisé en ce que le segment de moule (21) est, par une surface de liaison (159; 190) contenant les orifices d'entrée des conduits de fluide (28 à 30), appliqué directement sur une contre-surface (160; 189) complémentaire du coffret distributeur de fluide (144; 163), contenant, en alignement avec les orifices d'entrée, les orifices de sortie (153 à 158) des conduits de ramification (62, 63, 64, 71, 72, 73; 164 à 168), en formant le point de jonction pour la liaison non-vissée.

6. Dispositif distributeur selon l'une quelconque des revendications 2 à 5, caractérisé en ce que les conduits partiels (169, 170) sont formés par des chambres distinctes, disposées dans des plans parallèles les uns aux autres, du coffret distributeur de fluide (163).

7. Dispositif distributeur selon la revendication 6, caractérisé en ce que, dans le cas d'un moule de formage (22) constitué sous la forme d'un moule à double cavité, chaque support de segment de moule (7; 8) présente un coffret distributeur de fluide (163) commun aux deux segments de moule (21), que deux conduits de ramification (167, 168) d'un premier conduit partiel (170) sont chacun reliés aux conduits de fluide (29) dans une zone périphérique centrale de chaque segment de moule (21), et que trois autres conduits de ramification (164 à 166) d'un deuxième conduit partiel (169) sont reliés aux conduits de fluide (28, 30) dans les zones périphériques restantes des segments de moule (21).

8. Dispositif distributeur selon l'une quelconque des revendications 1 à 4, caractérisé en ce qu'un coffret de liaison (89, 113), pourvu de conduits de liaison (90; 114 à 117) est fixé sur le segment de moule (21; 77) et que chaque conduit de liaison (90; 114 à 117) est relié d'une part, en tant que point de jonction pour la liaison non-vissée, à l'orifice de sortie (95) de l'un des conduits de ramification (62, 63, 64; 106 à 111) du coffret distributeur de fluide (87; 99) à l'aide d'un orifice d'entrée, et d'autre part, à l'aide d'un orifice de sortie, à l'orifice d'entrée (91) d'au moins l'un des conduits de fluide (28 à 30).

9. Dispositif distributeur selon la revendication 8, caractérisé en ce qu'il est prévu en chaque point de jonction un organe de liaison (92; 118 à 121), logé d'une manière mobile contre le coffret de liaison (89, 113) et présentant un espace creux formant le début du conduit de liaison correspondant (90; 114 à 117), et que chaque organe de liaison (92; 118 à 121) s'appuie par un bord libre (94) sur une contre-surface complémentaire (96) entourant l'orifice de sortie (95) du conduit de ramification correspondant (62, 63, 64; 106 à 111).

10. Dispositif distributeur selon la revendication 9, caractérisé en ce que chaque organe de liaison (92; 118 à 121) est pourvu d'un poids (97), dont on peut choisir la valeur, qui augmente la pression d'étanchéité entre son bord libre (94) et la contre-surface (96).

Fig. 1

0 050 764

Fig. 2

Fig. 2A

Fig. 3

Fig. 4

Fig. 5

Fig. 8

Fig. 6

Fig. 9

Fig. 7

FIG. 10

# Fig.11